# EUROPÄISCHE PATENTSCHRIFT

(11) **EP 3 661 813 B1**
(45) Veröffentlichungstag und Bekanntmachung des Hinweises auf die Patenterteilung: **31.03.2021**
(21) Anmeldenummer: 18742990.7
(22) Anmeldetag: 16.07.2018
(51) Int. Cl.: B60R 19/34, B60R 19/04

(54) **STOSSFÄNGERANORDNUNG MIT EINEM QUERTRÄGER UND ZWEI CRASHBOXEN**
BUMPER ARRANGEMENT WITH A CROSSMEMBER AND TWO CRASH BOXES
ENSEMBLE FORMANT PARE-CHOCS COMPRENANT UNE TRAVERSE ET DEUX BOÎTIERS D'ABSORPTION DE CHOC

(30) Priorität: 02.08.2017 DE 102017007309
(43) Veröffentlichungstag der Anmeldung: 10.06.2020
(73) Patentinhaber: Audi AG, 85045 Ingolstadt (DE)
(72) Erfinder: MOST, Jermaine, 71636 Ludwigsburg (DE); DÖLL, Jochen, 74076 Heilbronn (DE)
(86) Internationale Anmeldenummer: PCT/EP2018/069184
(87) Internationale Veröffentlichungsnummer: WO 2019/025163

(56) Entgegenhaltungen:
- WO-A1-2011/002344
- DE-A1- 10 223 674
- DE-A1-102015 202 617
- US-A1- 2017 106 909
- US-A1- 2017 151 919

## Beschreibung

Die Erfindung betrifft eine Stoßfängeranordnung mit einem Querträger und zwei Crashboxen.

Eine Stoßfängeranordnung ist bspw. aus der DE 10 2013 000 269 A1 bekannt. Bei dieser bekannten Stoßfängeranordnung ist ein Querträger, welcher sich quer zur Fahrzeuglängsrichtung erstreckt, über zwei Crashboxen mittels Flanschplatten bzw. Prallplatten mit Fahrzeuglängsträgern gekoppelt.

Aus der WO 2011/002344 A1 ist eine Stoßfängeranordnung für ein Fahrzeug mit zwei jeweils mit geschlossenem Profil integrierten Crashboxen bekannt. Diese Stoßfängeranordnung weist einen Mittelabschnitt und zwei Endabschnitte auf, wobei zur Bildung der Crashboxen die Enden des Mittelabschnittes und die benachbarten Enden der Endabschnitte zusammengeschweißt sind. Sowohl der Mittelabschnitt als auch die beiden Endabschnitte weisen ein in Richtung des Fahrzeugs offenes U-Profil auf, wobei die Enden des Mittelabschnittes und die benachbarten Enden der Endabschnitte mit einem invertierten U-Profil ausgeführt sind und zur Bildung der Crashboxen miteinander verschweißt werden.

Des Weiteren besteht die Stoßfängeranordnung gemäß der DE 102 23 674 A1 aus einem Mittelabschnitt und jeweils an dessen Enden angeordneten Endabschnitten, wobei die Endabschnitte hörnerförmig mit einer Crashbox ausgeführt sind. Der Mittelabschnitt ist jeweils endseitig mit einem Eckbereich eines Endabschnittes verbunden, so dass die Crashbox mit einem Längsträger des Fahrzeugs verbindbar ist und das freie Ende eines Endabschnittes auf ein Vorderrad ausgerichtet ist.

Ein Querträger einer solchen Stoßfängeranordnung dient dazu, die Aufprallenergie eines bspw. mittig auf das Fahrzeug aufprallenden Gegenstandes (sogenannter Pfahllastfall) in die Crashboxen und anschließend in die Längsträger einzuleiten. Hierdurch soll die Karosserie und andere für die Verkehrssicherheit wichtige Baugruppen, wie bspw. Scheinwerfer, Kühler usw. vor Beschädigung bei leichteren Unfällen geschützt werden. Darüber hinaus leistet eine solche Stoßfängeranordnung auch ein Beitrag zur passiven Insassen Sicherheit bei schnellen Crashunfällen. In der Regel sind solche Stoßfängeranordnungen auf die geltenden Gesetze- und Versicherungsanforderungen gerichtet, die jedoch für Fahrzeuge mit Verbrennungsmotoren optimiert sind und flächige, voll- oder teilweise überdeckte Impaktoren bzw. Unfallgegner abdecken.

Bei reinen Elektrofahrzeugen entfällt jedoch ein Verbrennungsmotor, der bei Kraftfahrzeugen einen wichtigen Lastverteiler zum Schutz der Insassen oder sonstigen sicherheitsrelevanten Bauteile bei linienförmigen Lasteinleitungen, wie bspw. bei einem mittigen Baum- oder Pfahlanprall (sogenannter Pfahllastfall). In einem solchen Fall muss ein Querträger einer Stoßfängeranordnung einen Last verteilenden und energieabsorbierenden Beitrag leisten. Mit bekannten Stoßfängeranordnungen lässt sich dies jedoch nicht in gewünschtem Maß erreichen.

Es ist Aufgabe der Erfindung eine Stoßfängeranordnung für ein Fahrzeug, insbesondere für ein Elektrofahrzeug der eingangs genannten Art derart weiterzubilden, dass bei einem Pfahllastfall eine optimale Lasteinleitung in die Fahrzeugkarosserie erreicht wird.

Diese Aufgabe wird gelöst durch eine Stoßfängeranordnung mit den Merkmalen des Patentanspruchs 1.

Eine solche Stoßfängeranordnung für ein Fahrzeug umfasst:
- zwei Crashboxen, die jeweils 2-teilig mit einem in Fahrzeuglängsrichtung deformierbaren ersten Crashboxenabschnitt und einem in Fahrzeuglängsrichtung deformierbaren zweiten Crashboxenabschnitt ausgebildet sind,
- einen Querträger, der mit Enden der zwei Crashboxen gekoppelt und mit einem Mittelabschnitt mit einem Mittelabschnitt mit an dessen Enden in Fahrzeugquerrichtung sich anschließenden Endabschnitten ausgebildet ist, wobei
- die Endabschnitte jeweils auf dem ersten Crashboxenabschnitt abgestützt sind,
- der Mittelabschnitt ausschließlich auf die zweiten Crashboxenabschnitte abgestützt ist, und
- bei einem durch einen Pfahllastfall initiierten Energieeintrag auf den Mittelabschnitt des Querträgers nur die zweiten Crashboxenabschnitte energieabsorbierend deformierbar sind.

Bei einer solchen Stoßfängeranordnung wird im Fall eines Pfahllastfalles nur ein Teil des Aktivierungskraftniveaus der beiden Crashboxen angesprochen, indem nur die zweiten Crashboxenabschnitte aktiviert und energieabsorbierend deformiert werden. Hierbei verteilt der Mittelabschnitt des Querträgers den durch den Pfahllastfall erzeugten Krafteintrag derart auf die zweiten Crashboxenabschnitte, ohne dass dieser Mittelabschnitt hierbei kollabiert, d. h. die erfindungsgemäße Stoßfängeranordnung wandelt einem Pfahllastfall in einen Wandlastfall um.

Ein weiterer Vorteil dieser erfindungsgemäßen Stoßfängeranordnung besteht darin, dass gegenüber dem Stand der Technik kein größerer Bauraum benötigt wird und auch der Materialeinsatz äußerst beschränkt ist.

Die erfindungsgemäße Stoßfängeranordnung erfüllt natürlich auch die Grundfunktion, dass nämlich bei einem durch einen Wandlastfall initiierten Energieeintrag auf den Querträger sowohl die ersten Crashboxenabschnitte als auch die zweiten Crashboxenabschnitte energieabsorbierend deformierbar sind. In einem solchen Fall wird das vollständige Aktivierungskraftniveau der Crashboxen aktiviert.

Nach einer besonders vorteilhaften Weiterbildung der Erfindung ist die Stoßfängeranordnung derart ausgebildet, dass der erste und zweite Crashboxenabschnitt der Crashboxen mit einer Prallplatte kraftschlüssig verbunden sind, die an frontseitigen Enden von zwei Längsträgern angeordnet sind.

Bei dieser Ausgestaltung der Crashboxen ist weiterbildungsgemäß vorgesehen, dass
- die Endabschnitte des Querträgers jeweils mit dem ersten Crashboxenabschnitt kraftschlüssig verbunden sind, und
- der Mittelabschnitt mit den zweiten Crashboxenabschnitten kraftschlüssig verbunden ist.

Hierbei sind vorzugsweise die Endabschnitte des Querträgers mit dessen Mittelabschnitt über Sollbruchstellen verbunden.

Eine andere konstruktive Ausgestaltung der Stoßfängeranordnung sieht vor, dass
- die Crashboxen jeweils zur Bildung des ersten und zweiten Crashboxenabschnittes mittels einer in Fahrzeuglängsrichtung verlaufenden Trennwand ausgebildet sind, und
- jeweils der zweite Crashboxenabschnitt der Crashboxen frontseitig über eine Sollbruchstelle mit der Trennwand verbunden ist.

Nach einer Weiterbildung dieser konstruktiven Ausgestaltung
- ist die Trennwand über das frontseitige Ende der Crashbox mittels eines Verlängerungsabschnittes verlängert,
- greift der Verlängerungsabschnitt in einen an denselben konturangepassten Aufnahmeschlitz des Querträgers ein, und
- ist der Querträger im Bereich der Aufnahmeschlitze mit Sollbruchstellen ausgebildet, mit welchen der Mittelabschnitt des Querträgers sowie dessen Endabschnitte definiert sind.

Nach einer besonders vorteilhaften Ausgestaltung der Erfindung sind der erste und der zweite Crashboxenabschnitt einer Crashbox in Fahrzeugquerrichtung benachbart angeordnet. Hieran ist der Querträger mit dem Mittelabschnitt und den Endabschnitten konstruktiv angepasst.

Alternativ sind nach einer weiteren bevorzugten Weiterbildung der Erfindung der erste und der zweite Crashboxenabschnitt einer Crashbox in Fahrzeughochrichtung benachbart angeordnet. Auch hieran ist der Querträger mit dem Mittelabschnitt den in der Bahnabschnitten konstruktiv angepasst.

Die Erfindung wird nachfolgend anhand von Ausführungsbeispielen unter Bezugnahme auf die beigefügten Figuren ausführlich beschrieben. Es zeigen:
- Figur 1: eine schematische Darstellung eines ersten Ausführungsbeispiels einer Stoßfängeranordnung im nichtaktivierten und durch eine Pfahllast aktivierten Zustand,
- Figur 2: eine schematische Darstellung eines zweiten Ausführungsbeispiels einer Stoßfängeranordnung im nichtaktivierten und durch eine Pfahllast aktivierten Zustand,
- Figur 3: eine schematische Darstellung eines dritten Ausführungsbeispiels einer Stoßfängeranordnung im nichtaktivierten und durch eine Pfahllast aktivierten Zustand,
- Figur 4: eine schematische Darstellung eines vierten Ausführungsbeispiels einer Stoßfängeranordnung im nichtaktivierten und durch eine Pfahllast aktivierten Zustand, und
- Figur 5: eine schematische Darstellung einer Stoßfängeranordnung gemäß den Figuren 1 bis 4 im Fall einer Wandlastfall.

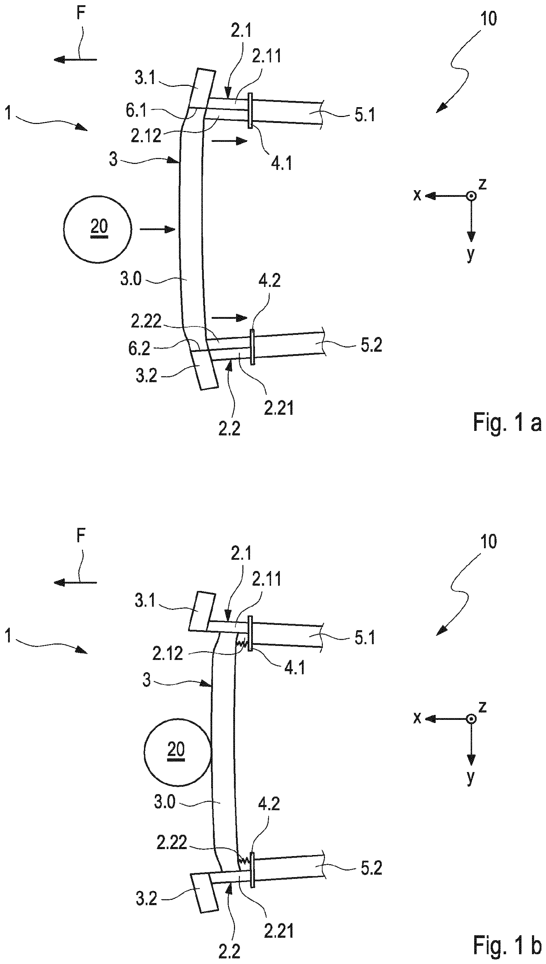

Die Figuren 1 bis 3 sowie die Figur 5 zeigt einen vorderen Bereich eines Vorderwagens eines Fahrzeugs 10 mit einem rechten Längsträger 5.1 und einem linken Längsträger 5.2 und einer Stoßfängeranordnung 1, die zwei Crashboxen 2.1 und 2.2 und einen Querträger 3 umfasst. An den frontseitigen Enden der Längsträger 5.1 und 5.2 ist jeweils über eine Prallplatte 4.1 bzw. 4.2 eine rechte Crashbox 2.1 und eine linke Crashbox 2.2 angeordnet. Der Querträger 3 ist mit den frontseitigen Enden der beiden Crashboxen 2.1 und 2.2 kraftschlüssig verbunden, wobei dieser Querträger 3 aus einem Mittelabschnitt 3.0 und jeweils einem endseitig an diesen Mittelabschnitt 3.0 in Fahrzeugquerrichtung (y-Richtung) angeordneten rechten Endabschnitt 3.1 und linken Endabschnitt 3.2 besteht.

Die rechte und linke Crashbox 2.1 und 2.2 umfasst jeweils einen ersten Crashboxenabschnitt 2.11 bzw. 2.21 und einen zweiten Crashboxenabschnitt 2.12 bzw. 2.22. Hierbei sind die beiden Crashboxen 2.1 und 2.2 sowie der Querträger 3 mit dem Mittelabschnitt 3.0 und den beiden Endabschnitten 3.1 und 3.2 konstruktiv derart aufgebaut, dass in einem Pfahllastfall, bei welchem das Fahrzeug 10 mittig gegen einen Pfahl 20 prallt, der dadurch bewirkte Krafteintrag auf den Mittelabschnitt 3.0 des Querträgers 3 dazu führt, dass dieser Krafteintrag nur auf die zweiten Crashboxenabschnitte 2.12 und 2.22 der Crashboxen 2.1 und 2.2 verteilt wird und dadurch diese beiden Crashboxenabschnitte 2.12 und 2.22 entgegen der Fahrtrichtung F deformiert werden, wie dies in den Figuren 1b, 2b und 3b dargestellt ist. Entsprechend diesen Darstellungen wird durch den Krafteintrag der Mittelabschnitt 3.0 des Querträgers 3 gegen die zweiten Crashboxenabschnitte 2.12 und 2.22 verschoben, ohne jedoch selbst zu kollabieren, d. h. mit einer solchen Stoßfängeranordnung 1 wird ein Pfahllastfall in einen Wandlastfall gewandelt.

Der auf den Mittelabschnitt 3.0 mittig angreifende Krafteintrag wird jedoch nicht auf die Endabschnitte 3.1 und 3.2 des Querträgers 3 übertragen und damit auch nicht auf die ersten Crashboxenabschnitte 2.11 und 2.21, die dadurch nicht deformiert werden. Damit wird in einem Pfahllastfall lediglich ein Teil des Aktivierungskraftniveaus der beiden Crashboxen 2.1 und 2.2 angesprochen.

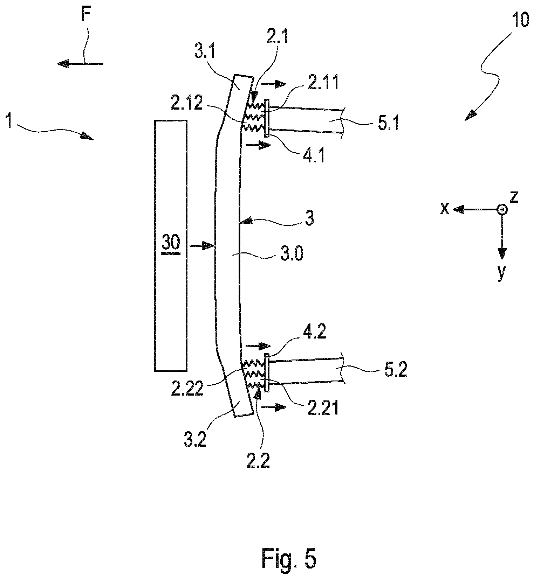

Das vollständige Aktivierungskraftniveau der beiden Crashboxen 2.1 und 2.2 wird in einem Wandlastfall gegen eine starre Barriere 30 mit voller Überdeckung aktiviert, wie dies in Figur 5 schematisch dargestellt ist. In diesem Fall wird der durch die Barriere 30 erzeugte Krafteintrag auf den Querträger 3 mittels dessen Mittelabschnittes 3.0 auf die zweiten Crashboxenabschnitte 2.12 und 2.22 und gleichzeitig mittels der Endabschnitte 3.2 auf die ersten Crashboxenabschnitte 2.11 und 2.21 übertragen und dadurch sowohl die ersten als auch die zweiten Crashboxenabschnitte 2.11, 2.21, 2.12 und 2.22 deformiert.

Die in Figuren 1 bis 3 dargestellten Stoßfängeranordnungen 1 unterscheiden sich in der konstruktiven Ausgestaltung der Crashboxen 2.1 und 2.2 sowie des Querträgers 3. Im Folgenden werden diese Unterschiede beschrieben.

Bei der Stoßfängeranordnung 1 gemäß Figur 1a sind die beiden Crashboxen 2.1 und 2.2 jeweils 2-teilig mit einem ersten Crashboxenabschnitt 2.11 bzw. 2.21 und einem zweiten Crashboxenabschnitt 2.12 bzw. 2.22 aufgebaut, wobei die beiden Crashboxenabschnitte 2.11 und 2.12 bzw. 2.21 und 2.22 einer Crashbox 2.1 bzw. 2.2 mit der Prallplatte 4.1 bzw. 4.2 kraftschlüssig verbunden sind.

Der Querträger 3 der Stoßfängeranordnung 1 gemäß Figur 1a ist dreiteilig mit dem Mittelabschnitt 3.0 und den endseitig angeordneten beiden Endabschnitten 3.1 und 3.2 ausgeführt, wobei der Mittelabschnitt 3.0 jeweils endseitig mit einem zweiten Crashboxenabschnitt 2.12 bzw. 2.22 der beiden Crashboxen 2.1 und 2.2 kraftschlüssig verbunden ist. Die Endabschnitte 3.1 und 3.2 des Querträgers 3 sind dagegen mit den ersten Crashboxenabschnitten 2.11 und 2.21 kraftschlüssig verbunden. Zusätzlich ist es möglich, dass die beiden Endabschnitte 3.1 und 3.2 jeweils mit einer Sollbruchstelle 6.1 bzw. 6.2 mit dem Mittelabschnitt 3.0 des Querträgers verbunden sind. Diese Sollbruchstellen 6.1 und 6.2 sind derart ausgeführt, dass diese bei einem Pfahllastfall entsprechend der Darstellung nach Figur 1b brechen, bevor ein Krafteintrag auf die Endabschnitte 3.1 und 3.2 erfolgen kann.

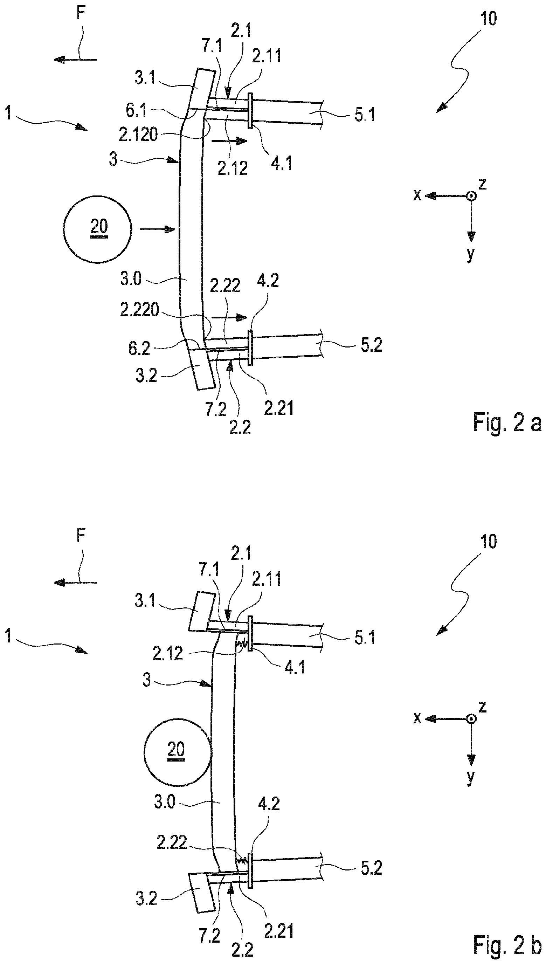

Bei der alternativen konstruktiven Ausgestaltung der Stoßfängeranordnung 1 nach Figur 2a werden die beiden Crashboxen 2.1 und 2.2 durch eine in Fahrzeuglängsrichtung (x-Richtung) verlaufende Trennwand 7.1 bzw. 7.2 zur Bildung des ersten und zweiten Crashboxenabschnittes 2.11 und 2.12 bzw. 2.21 und 2.22 getrennt. Hierbei ist der zweite Crashboxenabschnitt 2.12 bzw. 2.22 zusätzlich zur kraftschlüssigen Verbindung mit der Prallplatte 4.1 bzw. 4.2 am frontseitigen Ende mittels einer Sollbruchstelle 2.120 bzw. 2.220 mit der Trennwand 7.1 bzw. 7.2 verbunden.

Der Querträger 3 der Stoßfängeranordnung 1 gemäß Figur 2a ist ebenso dreiteilig mit dem Mittelabschnitt 3.0 und den endseitig angeordneten beiden Endabschnitten 3.1 und 3.2 ausgeführt, wobei der Mittelabschnitt 3.0 jeweils endseitig mit einem zweiten Crashboxenabschnitt 2.12 bzw. 2.22 der beiden Crashboxen 2.1 und 2.2 kraftschlüssig verbunden ist. Die Endabschnitte 3.1 und 3.2 des Querträgers 3 sind dagegen mit den ersten Crashboxenabschnitten 2.11 und 2.21 kraftschlüssig verbunden. Zusätzlich ist es möglich, dass die beiden Endabschnitte 3.1 und 3.2 jeweils mit einer Sollbruchstelle 6.1 bzw. 6.2 mit dem Mittelabschnitt 3.0 des Querträgers verbunden sind. Diese Sollbruchstellen 6.1 und 6.2 sowie die Sollbruchstellen 2.120 und 2.220 sind derart ausgeführt, dass diese bei einem Pfahllastfall entsprechend der Darstellung nach Figur 2b brechen, bevor ein Krafteintrag auf Endabschnitte 3.1 und 3.2 und die ersten Crashboxenabschnitte 2.11 und 2.21 erfolgen kann.

Bei einem Wandlastfall dieser Stoßfängeranordnung 1 gemäß Figur 2a werden zusätzlich auch die Trennwände 7.1 und 7.2 der beiden Crashboxen 2.1 und 2.2 deformiert (vgl. Figur 5).

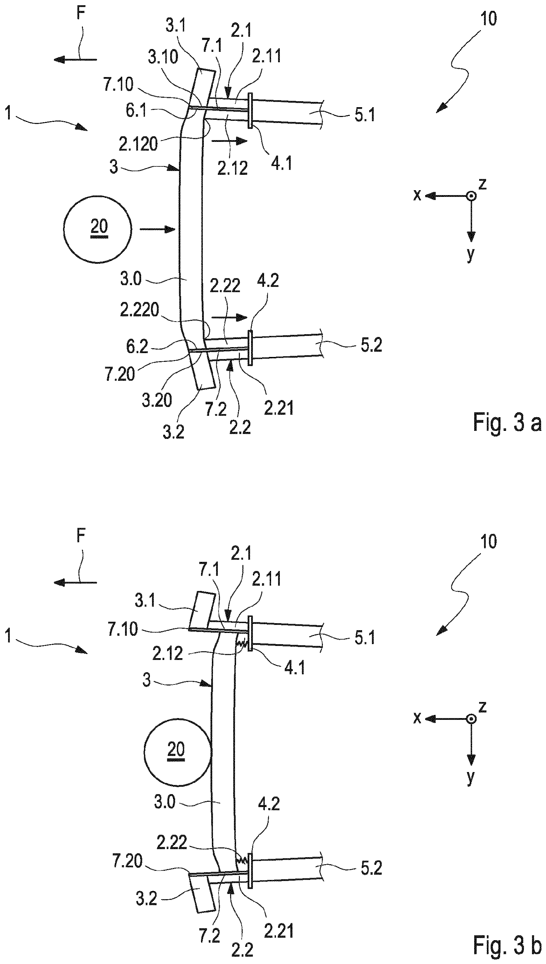

Bei der weiteren alternativen Ausgestaltung der Stoßfängeranordnung 1 nach Figur 3a sind die beiden Trennwände 7.1 und 7.2 über das randseitige Ende der Crashboxen 2.1 und 2.2 mittels eines Verlängerungsabschnittes 7.10 und 7.20 verlängert, wobei diese Verlängerungsabschnitte 7.10 und 7.20 in konturangepasste Aufnahmeschlitze 3.10 und 3.20 des Querträgers 3 eingreifen, wie dies in Figur 3a schematisch angedeutet ist. Außerhalb dieser Aufnahmeschlitze 3.10 und 3.20 des Querträgers 3 sind die Endabschnitte 3.1 und 3.2 über Sollbruchstellen 6.1 und 6.2 mit dem Mittelabschnitt 3.0 verbunden. Mit diesen Aufnahmeschlitzen 3.10 und 3.20 zusammen mit den Sollbruchstellen 6.1 und 6.2 werden die Geometrien des Mittelabschnittes 3.0 und der Endabschnitte 3.1 und 3.2 des Querträgers 3 definiert.

Auch bei dieser Stoßfängeranordnung 1 gemäß Figur 3a sind die zweiten Crashboxenabschnitte 2.12 und 2.22 zusätzlich zur kraftschlüssigen Verbindung mit den Prallplatten 4.1 und 4.2 am frontseitigen Ende mit Sollbruchstellen 2.120 und 2.220 mit der Trennwand 7.1 und 7.2 verbunden.

Diese Sollbruchstellen 6.1 und 6.2 sowie die Sollbruchstellen 2.120 und 2.220 sind derart ausgeführt, dass diese bei einem Pfahllastfall entsprechend der Darstellung nach Figur 3b brechen, bevor ein Krafteintrag auf Endabschnitte 3.1 und 3.2 und die ersten Crashboxenabschnitte 2.11 und 2.21 erfolgen kann.

Bei einem Wandlastfall dieser Stoßfängeranordnung 1 gemäß Figur 3a werden zusätzlich auch die Trennwände 7.1 und 7.2 der beiden Crashboxen 2.1 und 2.2 deformiert.

Die beiden Crashboxen 2.1 und 2.2 der in den Figuren 1 bis 3 dargestellten Stoßfängeranordnungen 1 sind zur Bildung der ersten und zweiten Crashboxenabschnitte 2.11 und 2.12 bzw. 2.21 und 2.22 durch eine x-z-Ebene geteilt, so dass der erste und zweite Crashboxenabschnitt 2.11 und 2.12 bzw. 2.21 und 2.22 einer Crashbox 2.1 bzw. 2.2 in Fahrzeugquerrichtung (y-Richtung) nebeneinander angeordnet sind.

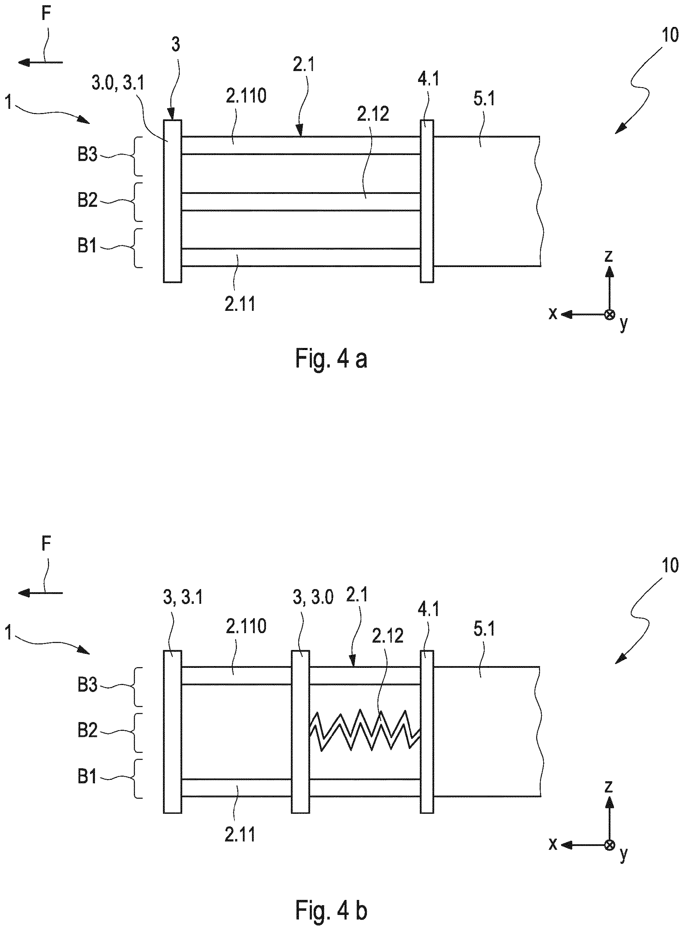

Eine Aufteilung der beiden Crashboxen 2.1 und 2.2 ist natürlich auch durch eine x-y-Ebene möglich, so dass der erste und zweite Crashboxenabschnitt 2.11 und 2.12 bzw. 2.21 und 2.22 einer Crashbox 2.1 bzw. 2.2 in Fahrzeughochrichtung (z-Richtung) übereinander angeordnet sind. Eine solche Ausgestaltung der Stoßfängeranordnung 1 zeigen die Figuren 4a und 4b, in welchen lediglich ein Längsträger 5.1 mit einer Crashbox 2.1 und einem Querträger 3 in einer Seitensicht dargestellt ist.

Gemäß diesen Figuren 4a und 4b wird die Crashbox 2.1 in Fahrzeughochrichtung (z-Richtung) in drei übereinanderliegende Bereiche B1, B2 und B3 geteilt. Hierbei bilden der Bereich B1 und der Bereich B3 einen ersten Crashboxenabschnitt 2.11 und 2.110, während der mittlere Bereich B2 einen zweiten Crashboxenabschnitt 2.12 bildet.

Der Querträger 3 besteht ebenso aus einem Mittelabschnitt 3.0 sowie an dessen Enden sich in Fahrzeugquerrichtung (y-Richtung) anschließende Endabschnitte 3.1 und 3.2. Hierbei ist gemäß Figur 4 der Endabschnitt 3.1 mit beiden ersten Crashboxenabschnitten 2.11 und 2.110 kraftschlüssig verbunden, während der Mittelabschnitt 3.0 des Querträgers 3 ausschließlich mit dem zweiten Crashboxenabschnitt 2.12 kraftschlüssig verbunden ist.

Entsprechendes gilt auch für die in Figur 4 nicht dargestellte zweite Crashbox 2.2.

Bei einem Pfahllastfall entsprechend den Figuren 1b, 2b und 3b wird der erzeugte Krafteintrag mittels des Mittelabschnittes 3.0 auf die zweiten Crashboxenabschnitte 2.12 und 2.22 (in Figur 4 nicht dargestellt) der beiden Crashboxen 2.1 und 2.2 gleichmäßig verteilt, wodurch der Mittelabschnitt 3.0 entgegen der Fahrtrichtung F verschoben und dadurch die beiden Crashboxenabschnitte entsprechend der Darstellung nach Figur 4b deformiert werden, ohne dass der Mittelabschnitt 3.0 des Querträgers 3 kollabiert. Damit wird auch in diesem Ausführungsbeispiel einer Stoßfängeranordnung 1 gemäß Figur 4 ein Pfahllastfall in einen Wandlastfall gewandelt.

Zusätzlich ist es möglich, dass die beiden Endabschnitte 3.1 und 3.2 jeweils mit einer Sollbruchstelle 6.1 bzw. 6.2 mit dem Mittelabschnitt 3.0 des Querträgers entsprechend den Darstellungen gemäß den Figuren 1 bis 3 verbunden sind. Diese Sollbruchstellen 6.1 und 6.2 sind derart ausgeführt, dass diese bei einem Pfahllastfall entsprechend der Darstellung nach Figur 4b brechen, bevor ein Krafteintrag auf diese Endabschnitte 3.1 und 3.2 erfolgen kann.

Anstelle einer Aufteilung der Crashbox 2.1 in Fahrzeughochrichtung (z-Richtung) in drei Bereiche B1, B2 und B3 gemäß Figur 4 ist es auch möglich, lediglich zwei übereinander angeordnete Bereiche vorzusehen, so dass ein Bereich den ersten Crashboxenabschnitt und der andere Bereich den zweiten Crashboxenabschnitt bildet.

### Bezugszeichen

- 1: Stoßfängeranordnung des Fahrzeugs 10

- 2.1: Crashbox der Stoßfängeranordnung 1
- 2.11: erster Crashboxenabschnitt der Crashbox 2.1
- 2.110: erster Crashboxenabschnitt der Crashbox 2.1
- 2.12: zweiter Crashboxenabschnitt der Crashbox 2.1
- 2.120: Sollbruchstelle des zweiten Crashboxenabschnittes 2.12
- 2.2: Crashbox der Stoßfängeranordnung 1
- 2.21: erster Crashboxenabschnitt der Crashbox 2.2
- 2.22: zweiter Crashboxenabschnitt der Crashbox 2.2
- 2.220: Sollbruchstelle des zweiten Crashboxenabschnittes 2.22

- 3: Querträger der Stoßfängeranordnung 1
- 3.0: Mittelabschnitt des Querträgers 3
- 3.1: Endabschnitt des Querträgers 3
- 3.10: Aufnahmeschlitz des Querträgers 3
- 3.2: Endabschnitt des Querträgers 3
- 3.20: Aufnahmeschlitz des Querträgers 3

- 4.1: Prallplatte der Stoßfängeranordnung 1
- 4.2: Prallplatte der Stoßfängeranordnung 1

- 5.1: Längsträger des Fahrzeugs 10
- 5.2: Längsträger des Fahrzeugs 10

- 6.1: Sollbruchstelle des Querträgers 3
- 6.2: Sollbruchstelle des Querträgers 3

- 7.1: Trennwand der Crashbox 2.1
- 7.10: Verlängerungsabschnitt der Trennwand 7.1
- 7.2: Trennwand der Crashbox 2.2
- 7.20: Verlängerungsabschnitt der Trennwand 7.2

- 10: Fahrzeug

- 20: Pfahl

- 30: Barriere

- B1: Bereich der Crashbox 2.1
- B2: Bereich der Crashbox 2.1
- B2: Bereich der Crashbox 2.1

- F: Fahrtrichtung des Fahrzeugs 10

## Patentansprüche

1. Stoßfängeranordnung (1) für ein Fahrzeug (10) umfassend:
- zwei Crashboxen (2.1, 2.2), die jeweils 2-teilig mit einem in Fahrzeuglängsrichtung (x) deformierbaren ersten Crashboxenabschnitt (2.11, 2.21) und einem in Fahrzeuglängsrichtung (x) deformierbaren zweiten Crashboxenabschnitt (2.12, 2.22) ausgebildet sind,
- einen Querträger (3), der mit Enden der zwei Crashboxen (2.1, 2.2) gekoppelt und mit einem Mittelabschnitt (3.0) mit an dessen Enden in Fahrzeugquerrichtung (y) sich anschließenden Endabschnitten (3.1, 3.2) ausgebildet ist, wobei
- die Endabschnitte (3.1, 3.2) jeweils auf dem ersten Crashboxenabschnitt (3.11, 2.21) abgestützt sind,
- der Mittelabschnitt (3.0) ausschließlich auf die zweiten Crashboxenabschnitte (2.12, 2.22) abgestützt ist, und
- bei einem durch einen Pfahllastfall initiierten Energieeintrag auf den Mittelabschnitt (3.0) des Querträgers (3) nur die zweiten Crashboxenabschnitte (2.12, 2.22) energieabsorbierend deformierbar sind.

2. Stoßfängeranordnung (1) nach Anspruch 1,
**dadurch gekennzeichnet, dass** bei einem durch einen Wandlastfall initiierten Energieeintrag auf den Querträger (3) sowohl die ersten Crashboxenabschnitte (2.11, 2.21) als auch die zweiten Crashboxenabschnitte (2.12, 2.22) energieabsorbierend deformierbar sind.

3. Stoßfängeranordnung (1) nach Anspruch 1 oder 2,
**dadurch gekennzeichnet, dass** der erste und zweite Crashboxenabschnitt (2.11, 2.21, 2.12, 2.22) der Crashboxen (2.1, 2.2) mit einer Prallplatte (4.1, 4.2) kraftschlüssig verbunden sind, die an frontseitigen Enden von zwei Längsträgern (5.1, 5.2) angeordnet sind.

4. Stoßfängeranordnung (1) nach Anspruch 3,
**dadurch gekennzeichnet, dass**
- die Endabschnitte (3.1, 3.2) des Querträgers (3) jeweils mit dem ersten Crashboxenabschnitt (2.11, 2.21) kraftschlüssig verbunden sind, und
- der Mittelabschnitt (3.0) mit den zweiten Crashboxenabschnitten (2.12, 2.22) kraftschlüssig verbunden ist.

5. Stoßfängeranordnung (1) nach einem der vorhergehenden Ansprüche, **dadurch gekennzeichnet, dass** die Endabschnitte (3.1, 3.2) des Querträgers (3) mit dessen Mittelabschnitt (3.0) über Sollbruchstellen (6.1, 6.2) verbunden sind.

6. Stoßfängeranordnung (1) nach Anspruch 1 oder 2,
**dadurch gekennzeichnet, dass**
- die Crashboxen (2.1, 2.2) jeweils zur Bildung des ersten und zweiten Crashboxenabschnittes (2.11, 2.21, 3.12, 2.22) mittels einer in Fahrzeuglängsrichtung (x) verlaufenden Trennwand (7.1, 7.2) ausgebildet sind, und
- jeweils der zweite Crashboxenabschnitt (2.12, 2.22) der Crashboxen (2.1, 2.2) frontseitig über eine Sollbruchstelle (2.120, 2.220) mit der Trennwand (7.1, 7.2) verbunden ist.

7. Stoßfängeranordnung (1) nach Anspruch 6,
**dadurch gekennzeichnet, dass**
- die Trennwand (7.1, 7.2) über das frontseitige Ende der Crashbox (2.1, 2.2) mittels eines Verlängerungsabschnittes (7.10, 7.20) verlängert ist,
- der Verlängerungsabschnitt (7.10, 7.20) in einen an denselben konturangepassten Aufnahmeschlitz (3.10, 3.20) des Querträgers (3) eingreift, und
- der Querträger (3) im Bereich der Aufnahmeschlitze (3.10, 3.20) mit Sollbruchstellen (6.1, 6.2) ausgebildet ist, mit welchen der Mittelabschnitt (3.0) des Querträgers (3) sowie dessen Endabschnitte (3.1, 3.2) definiert sind.

8. Stoßfängeranordnung (1) nach einem der vorhergehenden Ansprüche, **dadurch gekennzeichnet, dass** der erste und der zweite Crashboxenabschnitt (2.11, 2.21, 2.12, 2.22 einer Crashbox (2.1, 2.2) in Fahrzeugquerrichtung (y) benachbart angeordnet sind.

9. Stoßfängeranordnung (1) nach einem der Ansprüche 1 bis 7,
**dadurch gekennzeichnet, dass** der erste und der zweite Crashboxenabschnitt (2.11, 2.21, 2.12, 2.22) einer Crashbox (2.1, 2.2) in Fahrzeughochrichtung (z) benachbart angeordnet sind.

## Claims

1. Bumper arrangement (1) for a vehicle (10) comprising:
- two crash boxes (2.1, 2.2), which are configured respectively in 2-parts with a first crash box section (2.11, 2.21) deformable in vehicle longitudinal direction (x) and a second crash box section (2.12, 2.22) deformable in vehicle longitudinal direction (x),
- a transverse beam (3) which is coupled to ends of the two crash boxes (2.1, 2.2) and is designed to have a central section (3.0) with end sections (3.1, 3.2) adjoining its ends in vehicle transverse direction (y), wherein
- the end sections (3.1, 3.2) are supported respectively on the first crash box section (3.11, 2.21),
- the central section (3.0) is supported exclusively on the second crash box sections (2.12, 2.22) and
- with an application of energy initiated by a loading event with a post on the central section (3.0) of the transverse beam (3) only the second crash box sections (2.12, 2.22) are deformable in an energy-absorbing manner.

2. Bumper arrangement (1) according to claim 1,
**characterised in that**
with an admission of energy initiated by a wall loading event on the transverse beam (3) both the first crash box sections (2.11, 2.21) and also the second crash box sections (2.12, 2.22) are deformable in an energy-absorbing manner.

3. Bumper arrangement (1) according to claim 1 or 2,
**characterised in that**
- the first and second crash box section (2.11, 2.21, 2.12, 2.22) of the crash boxes (2.1, 2.2) are connected in a force-fitting manner to a baffle plate (4.1, 4.2), arranged on front ends of two longitudinal members (5.1, 5.2).

4. Bumper arrangement (1) according to claim 3,
**characterised in that**
- the end sections (3.1, 3.2) of the transverse beam (3) are connected in a force-fitting manner respectively to the first crash box section (2.11, 2.21), and
- the central section (3.0) is connected in a force-fitting manner to the second crash box sections (2.12, 2.22).

5. Bumper arrangement (1) according to any of the preceding claims,
**characterised in that**
the end sections (3.1, 3.2) of the transverse beam (3) are connected to its central section (3.0) by predetermined breaking points (6.1, 6.2).

6. Bumper arrangement (1) according to claim 1 or 2,
**characterised in that**
- the crash boxes (2.1, 2.2) are configured respectively to form the first and second crash box section (2.11, 2.21, 3.12, 2.22) by means of a dividing wall (7.1, 7.2) running in longitudinal direction of the vehicle (x), and
- respectively the second crash box section (2.12, 2.22) of the crash boxes (2.1, 2.2) is connected on the front side via a predetermined breaking point (2.120, 2.220) to the dividing wall (7.1, 7.2).

7. Bumper arrangement (1) according to claim 6,
**characterised in that**
- the dividing wall (7.1, 7.2) is extended over the front-side end of the crash box (2.1, 2.2) by means of an extension section (7.10, 7.20),
- the extension section (7.10, 7.20) engages in a receiving slot (3.10, 3.20) of the transverse beam (3) adjusted to the same contour, and
- the transverse beam (3) is configured to have predetermined breaking points (6.1, 6.2) in the region of the receiving slots (3.10, 3.20), by which the central section (3.0) of the transverse beam (3) and its end sections (3.1, 3.2) are defined.

8. Bumper arrangement (1) according to any of the preceding claims,
**characterised in that**
the first and the second crash box section (2.11, 2.21, 2.12, 2.22) of a crash box (2.1, 2.2) are arranged adjacent to one another in transverse direction of the vehicle (y).

9. Bumper arrangement (1) according to any of claims 1 to 7,
**characterised in that**
the first and the second crash box section (2.11, 2.21, 2.12, 2.22) of a crash box (2.1, 2.2) are arranged adjacent to one another in vehicle vertical direction (z).

## Revendications

1. Ensemble formant pare-chocs (1) pour un véhicule (10) comprenant :
- deux boîtiers d'absorption de chocs (2.1, 2.2) qui sont réalisés respectivement en deux parties avec une première section de boîtier d'absorption de chocs (2.11, 2.21) déformable dans le sens longitudinal de véhicule (x) et une seconde section de boîtier d'absorption de chocs (2.12, 2.22) déformable dans le sens longitudinal de véhicule (x),
- une poutre transversale (3) qui est couplée à des extrémités des deux boîtiers d'absorption de chocs (2.1, 2.2) et est réalisée avec une section médiane (3.0) avec des sections d'extrémité (3.1, 3.2) se raccordant à ses extrémités dans le sens transversal de véhicule (y), dans lequel
- les sections d'extrémité (3.1, 3.2) sont en appui respectivement sur la première section de boîtier d'absorption de chocs (3.11, 2.21),
- la section médiane (3.0) est en appui exclusivement sur les secondes sections de boîtier d'absorption de chocs (2.12, 2.22), et
- pour un apport d'énergie initié par un cas de charge de poteau sur la section médiane (3.0) de la poutre transversale (3), seules les secondes sections de boîtier d'absorption de chocs (2.12, 2.22) sont déformables par absorption d'énergie.

2. Ensemble formant pare-chocs (1) selon la revendication 1,
**caractérisé en ce que**, pour un apport d'énergie initié par un cas de charge de mur sur la poutre transversale (3), non seulement les premières sections de boîtier d'absorption de chocs (2.11, 2.21) mais aussi les secondes sections de boîtier d'absorption de chocs (2.12, 2.22) sont déformables par absorption d'énergie.

3. Ensemble formant pare-chocs (1) selon la revendication 1 ou 2,
**caractérisé en ce que** la première et seconde section de boîtier d'absorption de chocs (2.11, 2.21, 2.12, 2.22) des boîtiers d'absorption de chocs (2.1, 2.2) sont reliées à force à une plaque déflectrice (4.1, 4.2), lesquelles sont agencées à des extrémités côté avant de deux poutres longitudinales (5.1, 5.2).

4. Ensemble formant pare-chocs (1) selon la revendication 3,
**caractérisé en ce que**
- les sections d'extrémité (3.1, 3.2) de la poutre transversale (3) sont reliées à force respectivement à la première section de boîtier d'absorption de chocs (2.11, 2.21), et
- la section médiane (3.0) est reliée à force aux secondes sections de boîtier d'absorption de chocs (2.12, 2.22).

5. Ensemble formant pare-chocs (1) selon l'une quelconque des revendications précédentes,
**caractérisé en ce que**
les sections d'extrémité (3.1, 3.2) de la poutre transversale (3) sont reliées à sa section médiane (3.0) par des points destinés à la rupture (6.1, 6.2).

6. Ensemble formant pare-chocs (1) selon la revendication 1 ou 2,
**caractérisé en ce que**
- les boîtiers d'absorption de chocs (2.1, 2.2) sont réalisés respectivement pour la formation de la première et seconde section de boîtier d'absorption de chocs (2.11, 2.21, 3.12, 2.22) au moyen d'une paroi de séparation (7.1, 7.2) s'étendant dans le sens longitudinal de véhicule (x), et
- respectivement la seconde section de boîtier d'absorption de chocs (2.12, 2.22) des boîtiers d'absorption de chocs (2.1, 2.2) est reliée côté avant par un point destiné à la rupture (2.120, 2.220) à la paroi de séparation (7.1, 7.2).

7. Ensemble formant pare-chocs (1) selon la revendication 6,
**caractérisé en ce que**
- la paroi de séparation (7.1, 7.2) est prolongée par l'extrémité côté avant du boîtier d'absorption de chocs (2.1, 2.2) au moyen d'une section de prolongement (7.10, 7.20),
- la section de prolongement (7.10, 7.20) vient en prise dans une fente de réception (3.10, 3.20) au contour adapté à celle-ci de la poutre transversale (3), et
- la poutre transversale (3) est réalisée dans la zone des fentes de réception (3.10, 3.20) avec des points destinés à la rupture (6.1, 6.2), avec lesquels la section médiane (3.0) de la poutre transversale (3) ainsi que ses sections d'extrémité (3.1, 3.2) sont définies.

8. Ensemble formant pare-chocs (1) selon l'une quelconque des revendications précédentes,
**caractérisé en ce que**
la première et la seconde section de boîtier d'absorption de chocs (2.11, 2.21, 2.12, 2.22) d'un boîtier d'absorption de chocs (2.1, 2.2) sont agencées de manière contigüe dans le sens transversal de véhicule (y).

9. Ensemble formant pare-chocs (1) selon l'une des revendications 1 à 7,
**caractérisé en ce que**
la première et la seconde section de boîtier d'absorption de chocs (2.11, 2.21, 2.12, 2.22) d'un boîtier d'absorption de chocs (2.1, 2.2) sont agencées de manière contigue dans le sens vertical de véhicule (z).
